# EUROPEAN PATENT SPECIFICATION

(11) **EP 4 542 157 B1**
(45) Date of publication and mention of the grant of the patent: **18.03.2026**
(21) Application number: 24205349.4
(22) Date of filing: 08.10.2024
(51) Int. Cl.: F28D 1/053, F28F 1/32

(54) **BATTERY ASSEMBLY FOR HEAT EXCHANGER AND HEAT EXCHANGER EQUIPPED WITH THIS BATTERY ASSEMBLY**
BATTERIEANORDNUNG FÜR WÄRMETAUSCHER UND WÄRMETAUSCHER MIT DIESER BATTERIEANORDNUNG
ENSEMBLE BATTERIE POUR ÉCHANGEUR DE CHALEUR ET ÉCHANGEUR DE CHALEUR ÉQUIPÉ DE CET ENSEMBLE BATTERIE

(30) Priority: 19.10.2023 IT 202300021780
(43) Date of publication of application: 23.04.2025
(73) Proprietor: LU-VE S.P.A., 21100 VARESE (IT)
(72) Inventor: Rottigni, Alessandro, 20031 Cesate (MI) (IT); Filippini, Stefano, 20025 Legnano (MI) (IT)
(74) Representative: Praxi Intellectual Property Milano

(56) References cited:
- EP-A2- 1 434 022
- EP-A2- 1 715 277
- US-A- 5 915 472
- US-A1- 2014 196 700
- US-B2- 9 534 529

## Description

### BACKGROUND OF THE INVENTION

The present invention concerns a new battery assembly for heat exchangers and the heat exchanger equipped with this battery assembly.

Battery assemblies of heat exchangers, such as refrigeration, air conditioning, heating equipments and the like, comprise a finned pack consisting of a plurality of tubes and fins with a large radiating surface, made from materials with a high thermal conductivity coefficient such as copper and aluminum. Both the tubes and the fins of the finned pack have a reduced thickness, which is not sufficient to withstand high static loads and, even less, the dynamic loads due to the self-weight of the finned pack on the battery assembly. Moreover, when these structures are subjected to the operating thermal jumps of the heat exchanger, thermal expansions become the main cause of undesirable mechanical stresses on the tube bundle of the finned pack.

In order to support the described set of tubes and fins, the battery assembly of the heat exchanger has a shoulder assembly, consisting of a front jig fixed on the battery assembly by means of suitable uprights. On this front jig holes are provided, the diameter of which is larger than the diameter of the tubes that pass through them and which are intended to allow dimensional variations due to thermal jumps. Furthermore, to make the most of the free space between the outer surface of the tubes and the respective holes of the shoulder that houses them, it is necessary for the tubes to be perfectly centered relative to these holes.

However, it may happen that this centering condition is lost, for example, during the assembling operations of the finned pack on the battery assembly.

In the solutions proposed by the prior art, the support shoulders of the finned pack are fixed permanently or non-removably to the heat exchanger frame. For this reason, once the finned pack is put into operation on the battery assembly, it is no longer possible to correct the centering defects of the tubes relative to the shoulder holes, because the relative position of these components is no longer changeable.

The patent publication No. EP 1 715 277 A2 discloses a heat exchanger construction equipped with a finned pack wherein the fins are fixed by means of an adhesive material.

EP 1 715 277 A1 discloses a battery pack according to the preamble of claims 1 and 2.

### SUMMARY OF THE INVENTION

The main object of the present invention is therefore to provide a battery assembly for heat exchangers which, compared to similar devices of the prior art, allows correcting the centering errors of the tubes inside the holes of the respective shoulder assemblies.

This and other objects are achieved with the battery assembly of claims 1 and 2. Further characteristics of the invention result from the remaining claims.

Compared to the battery assemblies of the prior art, the one according to the present invention offers the advantage of having shoulder assemblies equipped with a floating jig, i.e., mounted sliding on the frame of the battery assembly, so as to allow correcting the centering errors between the holes of the shoulder jig and the tubes that pass through them.

### BRIEF DESCRIPTION OF THE DRAWINGS

This and other objects, advantages and characteristics result from the following description of some preferred embodiments of the battery assembly of the invention illustrated, by way of non-limiting examples, in the figures of the attached drawing sheets.

In them:
- Figure 1 illustrates the enlarged detail of a shoulder assembly of the prior art, with the tubes of the finned pack arranged in a non-centered position relative to the holes of the front jig of the shoulder assembly;
- Figure 2 illustrates a first example of the battery assembly of the invention, with an exploded view of the shoulder assembly;
- Figure 3 illustrates an enlarged detail of the battery assembly of Figure 2;
- Figure 4 illustrates the detail of Figure 3, with the front jig of the shoulder assembly assembled in operation on the battery assembly;
- Figures 5 and 6 illustrate the method of correcting the centering errors of the tubes relative to the holes of the shoulder assembly of Figures 2 to 4;
- Figures 7 to 9 illustrate a second embodiment of the shoulder assembly of the invention;
- Figures 10 to 12 illustrate a third embodiment of the shoulder assembly of the invention.

### DETAILED DESCRIPTION OF PREFERRED EMBODIMENTS

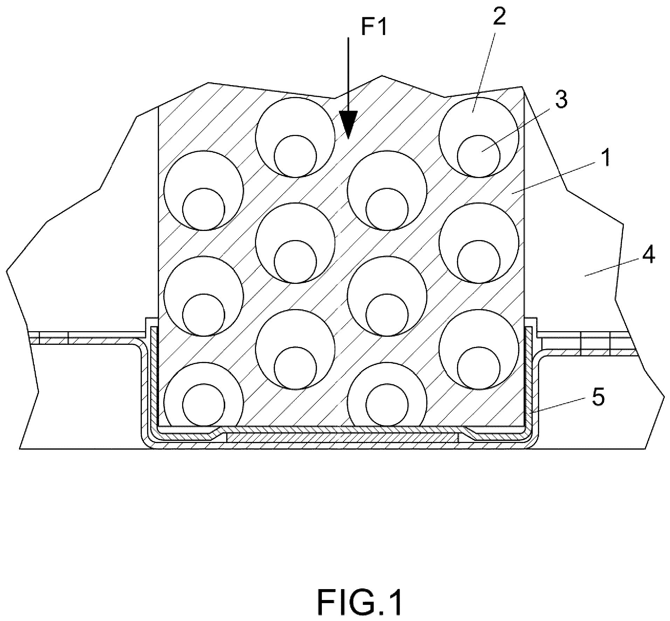

The shoulder assembly of the prior art, as illustrated in Figure 1, comprises a front jig 1 equipped with holes 2 for the passage of the tubes 3 of the tube bundle of the heat exchanger battery assembly.

As can be seen from the figure, the weight of the tube bundle has caused a displacement in the direction of arrow F1 of the tubes 3 inside the holes 2 of the jig 1, until reaching a resting position on the latter.

This working condition of the heat exchanger is however harmful to its operation, both because the tubes 3 are not left with enough space to compensate for thermal expansions, and because the material and thickness of the tubes do not offer the necessary mechanical strength to support the weight of the tube bundle on the jig 1 of the shoulder assembly.

Furthermore, the described known structure does not allow correcting the lack of centering of the tubes relative to the holes of the shoulder assembly, as the coupling of the latter to the battery assembly 4 of the heat exchanger is achieved by gluing a corresponding profiled metal sheet 5 onto the finned pack.

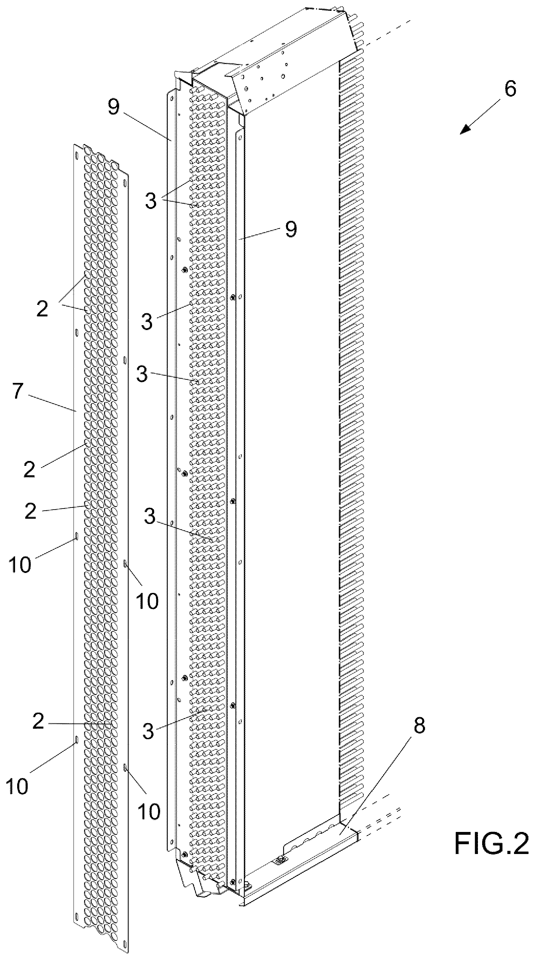

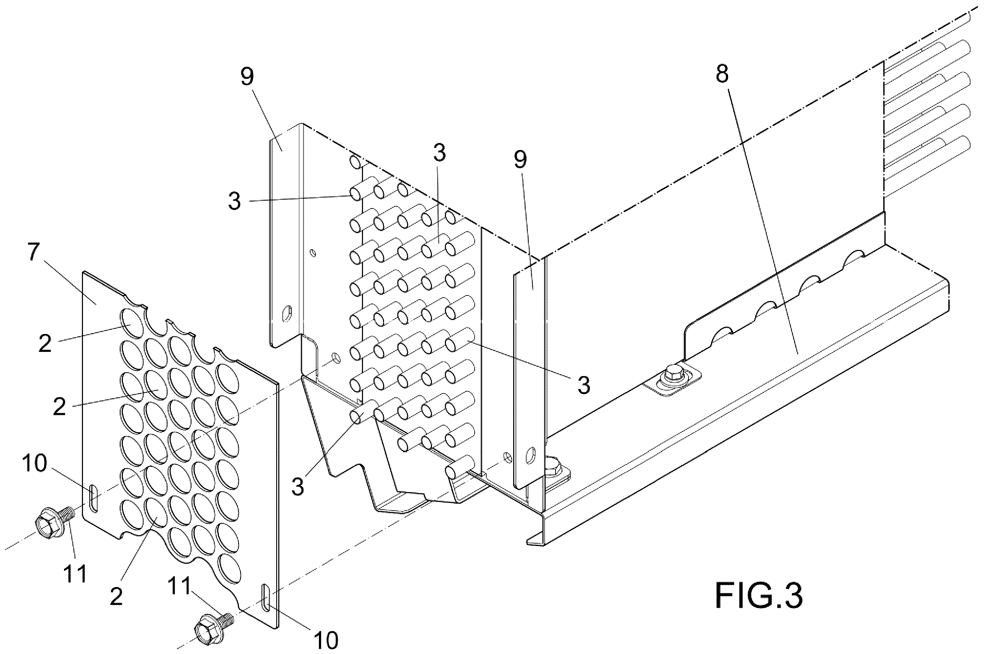

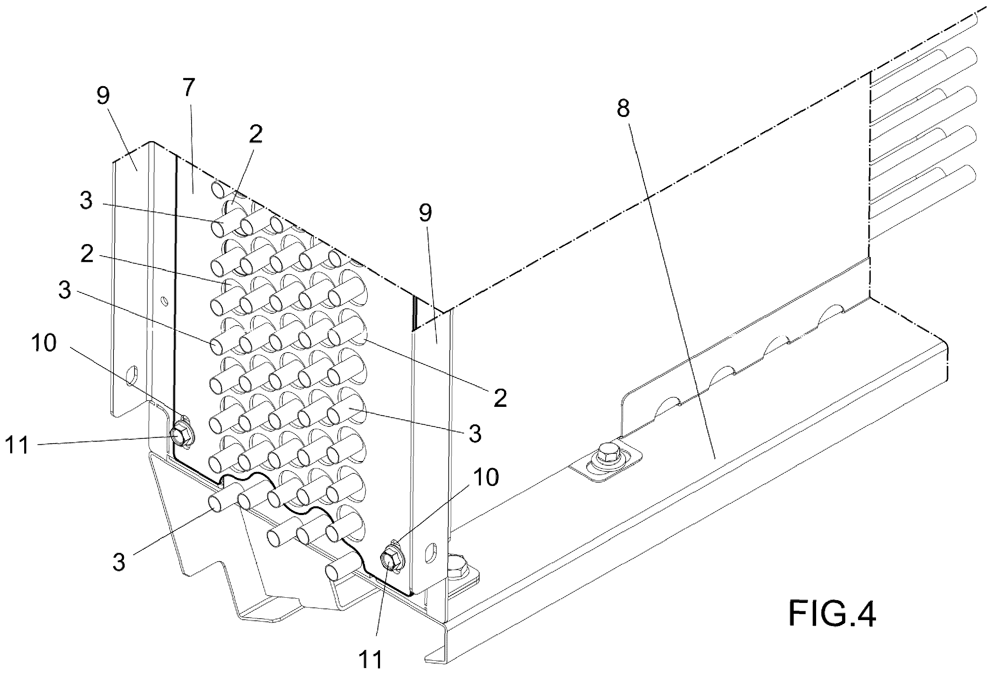

To overcome this inconvenience the battery assembly 6 of Figures 2 to 6 is provided, equipped with a shoulder assembly formed by a front jig 7, equipped with holes 2 for the passage of the tubes 3 and fixed on the frame 8 of the battery assembly 6 by means of respective uprights 9.

According to the invention, slots 10 are provided on the front jig 7, within which screws 11 are housed for fixing the jig 7 itself to the uprights 9 of the heat exchanger battery assembly 6.

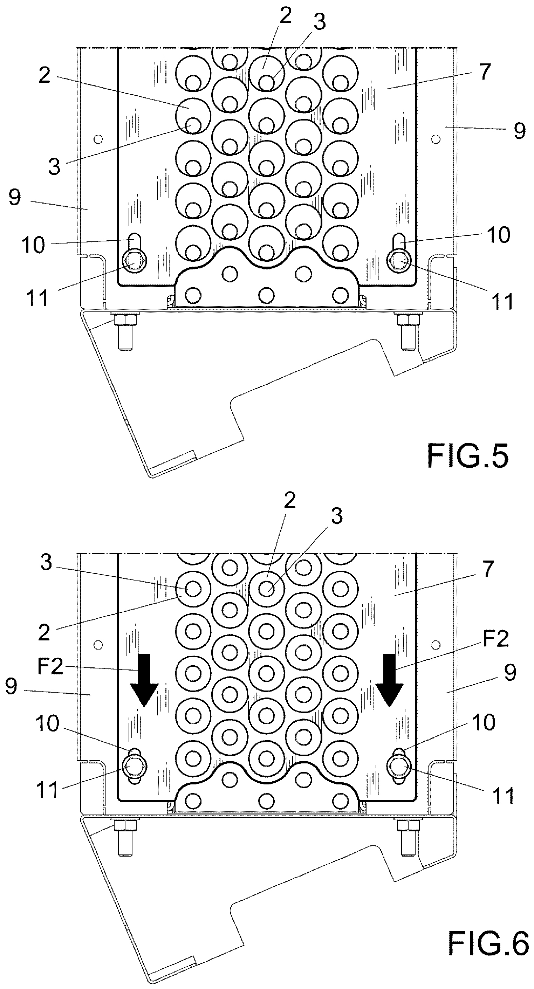

Thanks to the described structure of the battery assembly of the invention, in the event of tube bundle failure as illustrated in Figure 5, the correct centering condition of the tubes 3 relative to the holes 2 of the jig 7 can be restored by loosening the screws 11 and sliding it relative to the body of the tubes 3 (arrows F2 of Figure 6), exploiting the greater size of the slots 10 compared to the screws 11 fixing the jig to the battery assembly.

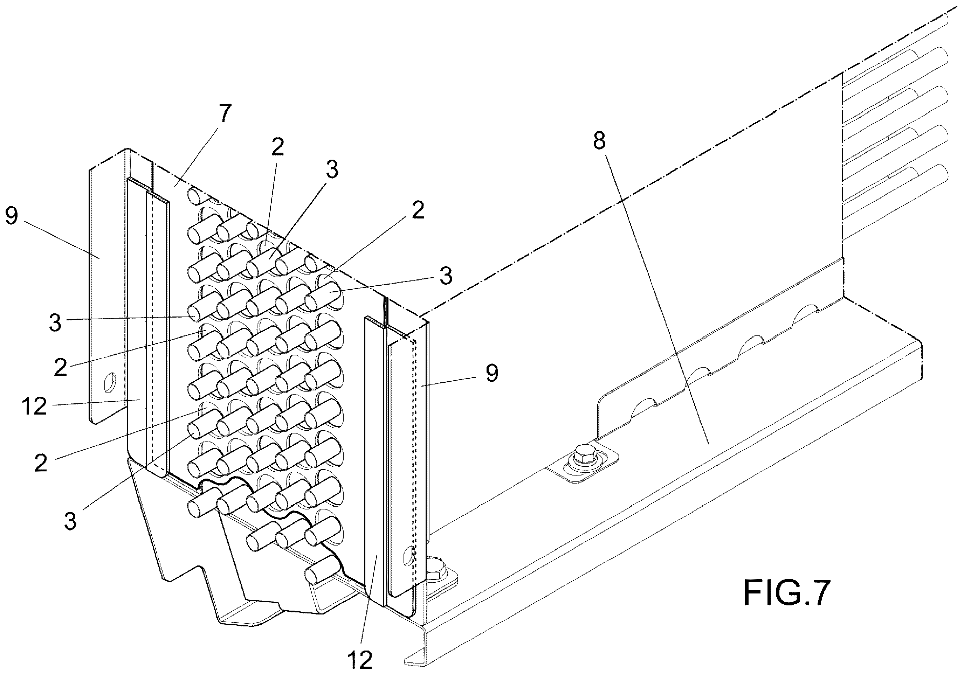

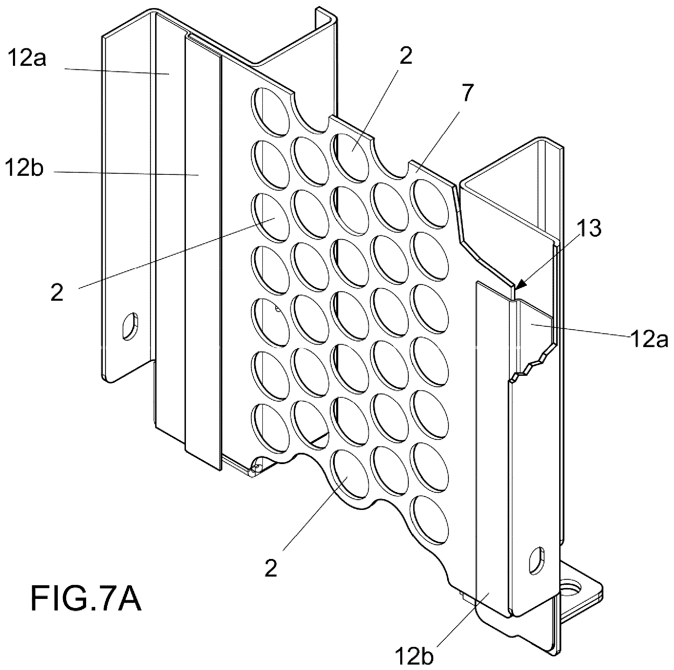

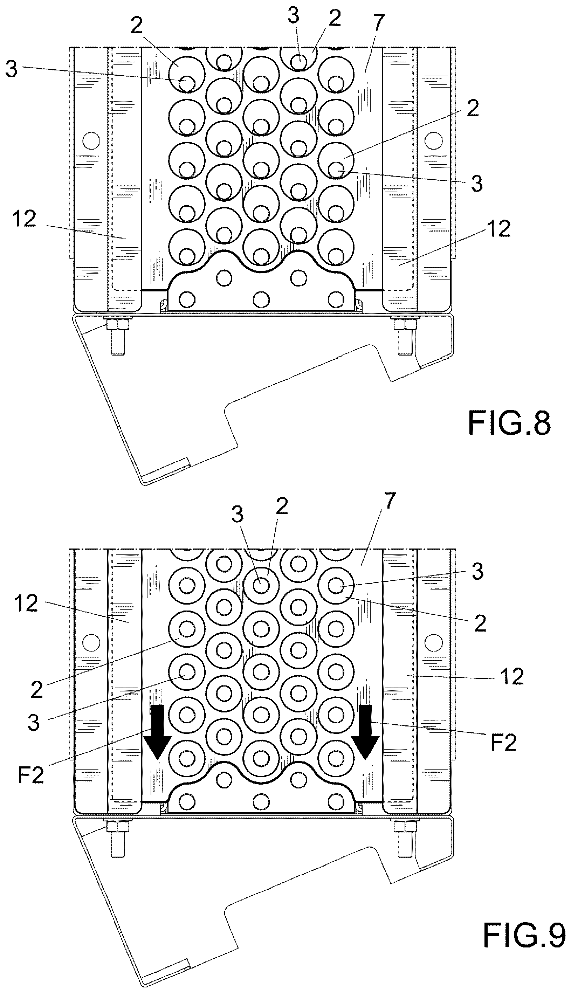

A similar result is achieved thanks to the embodiment illustrated in Figures 7 to 9, wherein the sliding of the jig 7 in the direction of arrows F2 of Figure 9 is achieved through guides 12, fixed to the frame 8 of the battery assembly and suitable for creating a longitudinal seat 13 housing the jig 7 with friction sliding on the battery assembly.

In particular, as illustrated in Figure 7A, the cited seat 13 is created by providing the guides 12 with a portion 12b raised with respect to their portion 12a adhering to the surface of the upright 9, thus creating a sort of pocket for the sliding housing of the corresponding edge of the jig 7.

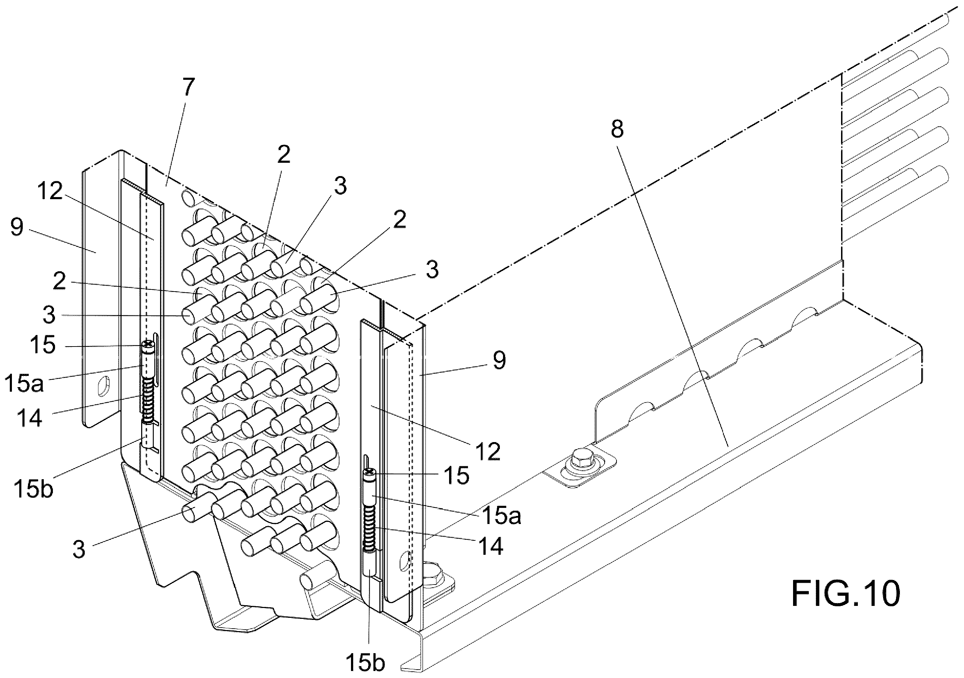

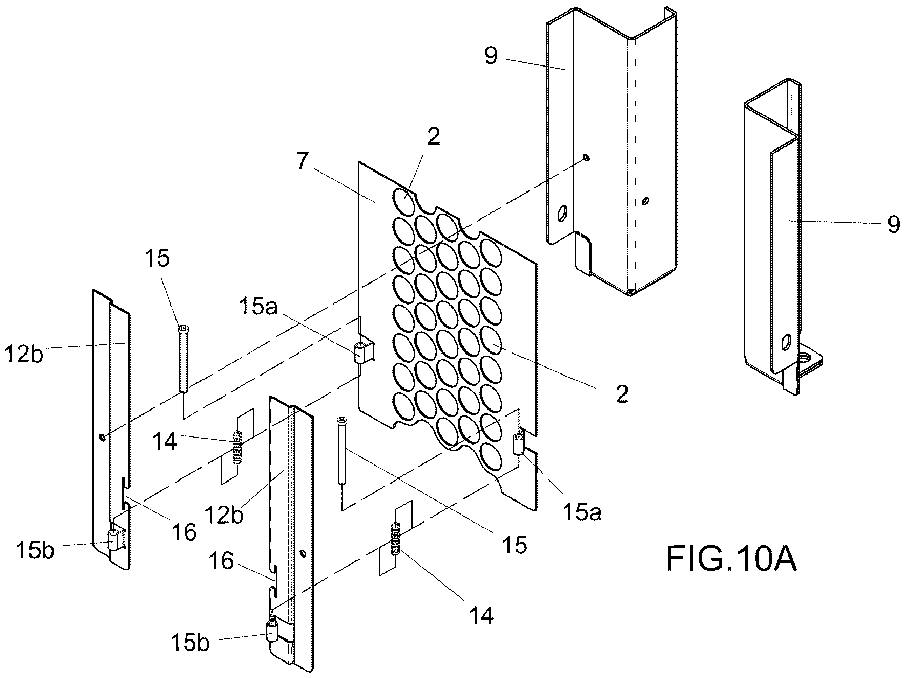

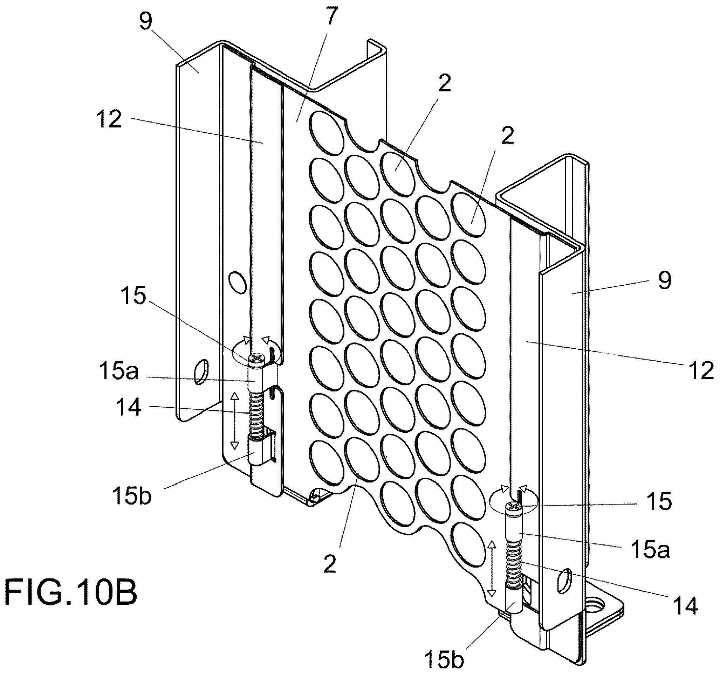

In the variant of Figures 10 to 12, the sliding guide system of Figures 7 to 9 is integrated with a spring device 14, fixed to the corresponding guide 12 and whose length is controlled by means of a corresponding screw 15.

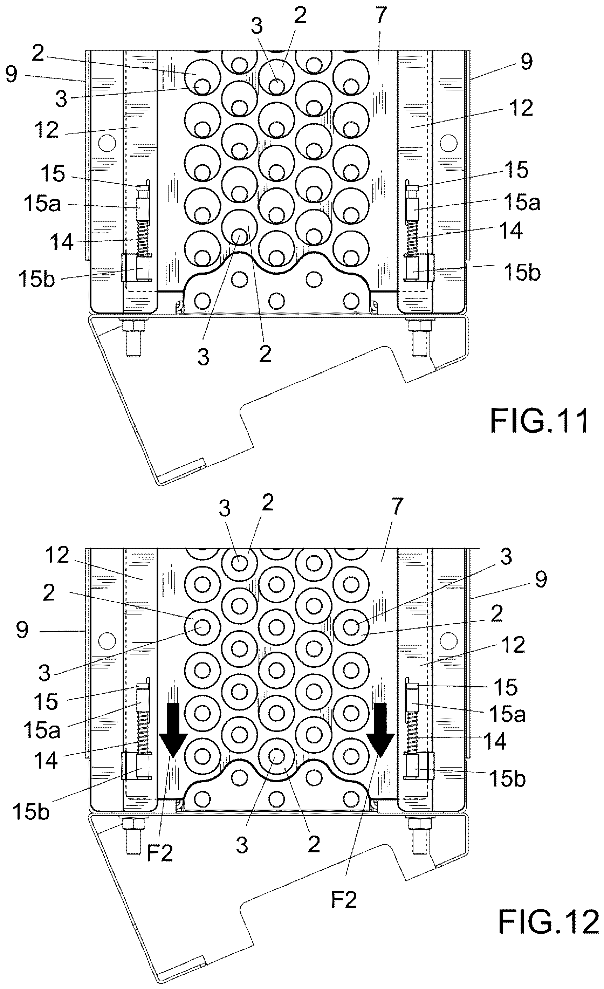

In particular, and as better illustrated in Figures 10A and 10B, the spring 14 is coaxially fitted onto the shank of the screw 15. The same screw 15 engages, on one side, within a bushing 15a integral with the jig 7 and, on the other side, within a threaded bushing 15b, integral with the raised portion 12b of the cited guides 12. The bushing 15a of the jig 7 is finally housed sliding within a cutout 16, also provided on the raised portion 12b of the guides 12. Therefore, by acting on the screw 15 the position of the jig 7 on the guides 12 can be adjusted in a controlled manner, so as to achieve the correct centering of the tubes 3 in the holes 2, as illustrated in Figures 11 and 12.

Modifications can be made to the invention, as described above and illustrated in the attached drawing sheets, to create further variants that still fall within the scope of the following claims. In particular, different systems could be used suitable to allow the sliding of the front jig 7 of the shoulder assembly with respect to the position of the tubes 3, thus however achieving the effects of the invention.

Moreover, the holes 2 preferably have a diameter at least 0.1 mm larger than the diameter of the tubes 3.

Finally, the screws 11 could be replaced with any other means, suitable for fixing the jig to the uprights of the battery assembly.

## Claims

1. Battery assembly for a heat exchanger, comprising a tube bundle provided with tubes (3) and a shoulder assembly provided with a front jig (7) bearing holes (2) for the passage of said tubes (3), wherein said front jig (7) is fixed on the frame (8) of the battery assembly by means of respective uprights (9), wherein said front jig (7) is mounted with adjustable positioning on said battery assembly, so as to correct centering errors of the tubes (3) relative to said holes (2) of the jig (7), **characterized in that** said front jig (7) has slots (10), within which screws (11) and the like are housed for fixing the jig (7) itself to said uprights (9) of the battery assembly (6).

2. Battery assembly for a heat exchanger, comprising a tube bundle provided with tubes (3) and a shoulder assembly provided with a front jig (7) bearing holes (2) for the passage of said tubes (3), wherein said front jig (7) is fixed on the frame (8) of the battery assembly by means of respective uprights (9), wherein said front jig (7) is mounted with adjustable positioning on said battery assembly, so as to correct centering errors of the tubes (3) relative to said holes (2) of the jig (7), guides (12) being fixed to the frame (8) of the battery assembly (6) so as to create a longitudinal seat (13) housing the jig (7) with friction sliding on the battery assembly itself, **characterized in** a spring device (14) being further fixed to said guides (12) and whose length is controlled by means of a corresponding screw (15).

3. Battery assembly according to claim 2, **characterized in that** said guides (12) have a portion (12b), raised with respect to a portion (12a) adhering to the uprights (9) of the battery assembly, so as to form said longitudinal seat (13) for sliding housing of said jig (7).

4. Battery assembly according to claim 2, **characterized in that** said spring (14) and screw (15) device further comprises a bushing (15a) integral with said jig (7) and a bushing (15b) integral with said raised portion (12b) of the guides (12), a cutout (16) being provided on the portion (12b) itself for the sliding housing of said bushing (15a), said screw (15) engaging with said bushings (15a, 15b) to achieve the controlled sliding of the jig (7) on said guides (12).

5. Battery assembly according to one or more of the preceding claims, **characterized in that** said holes (2) have a diameter at least 0.1 mm larger than the diameter of the tubes (3).

6. Heat exchanger, **characterized in that** it comprises at least one battery assembly according to one or more of the preceding claims.

## Patentansprüche

1. Batterieanordnung für einen Wärmetauscher, umfassend ein Rohrbündel, das mit Rohren (3) versehen ist, und eine Schulteranordnung, die mit einer vorderen Haltevorrichtung (7) versehen ist, die Löcher (2) für den Durchgang der Rohre (3) trägt, wobei die vordere Haltevorrichtung (7) an dem Rahmen (8) der Batterieanordnung mittels entsprechender Stützen (9) befestigt ist, wobei die vordere Haltevorrichtung (7) mit einem einstellbarem Positionieren an der Batterieanordnung montiert ist, um Zentrierfehler der Rohre (3) relativ zu den Löchern (2) der Haltevorrichtung (7) zu korrigieren, **dadurch gekennzeichnet, dass** die vordere Haltevorrichtung (7) Schlitze (10) aufweist, innerhalb denen Schrauben (11) und dergleichen untergebracht sind, zum Befestigen der Haltevorrichtung (7) selbst an den Stützen (9) der Batterieanordnung (6).

2. Batterieanordnung für einen Wärmetauscher, umfassend ein Rohrbündel, das mit Rohren (3) versehen ist, und eine Schulteranordnung, die mit einer vorderen Haltevorrichtung (7) versehen ist, die Löcher (2) für den Durchgang der Rohre (3) trägt, wobei die vordere Haltevorrichtung (7) an dem Rahmen (8) der Batterieanordnung mittels entsprechender Stützen (9) befestigt ist, wobei die vordere Haltevorrichtung (7) mit einstellbarem Positionieren an der Batterieanordnung montiert ist, um Zentrierfehler der Rohre (3) relativ zu den Löchern (2) der Haltevorrichtung (7) zu korrigieren, wobei Führungen (12) an dem Rahmen (8) der Batterieanordnung (6) befestigt sind, um einen Längssitz (13) zu schaffen, in dem die Haltevorrichtung (7) mit einer Reibungsgleitung an der Batterieanordnung selbst untergebracht ist, **dadurch gekennzeichnet, dass** eine Federeinrichtung (14) ferner an den Führungen (12) befestigt ist und deren Länge mittels einer entsprechenden Schraube (15) gesteuert wird.

3. Batterieanordnung nach Anspruch 2, **dadurch gekennzeichnet, dass** die Führungen (12) einen Abschnitt (12b) aufweisen, der hinsichtlich eines Abschnitts (12a), der an den Stützen (9) der Batterieanordnung haftet, erhöht ist, um den Längssitz (13) zum gleitenden Unterbringen der Haltevorrichtung (7) auszubilden.

4. Batterieanordnung nach Anspruch 2, **dadurch gekennzeichnet, dass** die Einrichtung der Feder (14) und der Schraube (15) ferner eine Buchse (15a), die mit der Haltevorrichtung (7) integral ist, und eine Buchse (15b), die mit dem erhöhten Abschnitt (12b) der Führungen (12) integral ist, umfasst, wobei ein Ausschnitt (16) an dem Abschnitt (12b) selbst für das gleitende Unterbringen der Buchse (15a) bereitgestellt ist, wobei die Schraube (15) mit den Buchsen (15a, 15b) in Eingriff steht, um das gesteuerte Gleiten der Haltevorrichtung (7) auf den Führungen (12) zu erreichen.

5. Batterieanordnung nach einem oder mehreren der vorstehenden Ansprüche, **dadurch gekennzeichnet, dass** die Löcher (2) einen Durchmesser aufweisen, der mindestens 0,1 mm größer als der Durchmesser der Rohre (3) ist.

6. Wärmetauscher, **dadurch gekennzeichnet, dass** er mindestens eine Batterieanordnung nach einem oder mehreren der vorstehenden Ansprüche umfasst.

## Revendications

1. Ensemble batterie destiné à un échangeur de chaleur, comprenant un faisceau de tubes pourvu de tubes (3) et un ensemble d'épaulement pourvu d'un bâti (7) avant comportant des trous (2) destinés au passage desdits tubes (3), dans lequel ledit bâti (7) avant est fixé sur le châssis (8) de l'ensemble batterie au moyen de montants (9) respectifs, dans lequel ledit bâti (7) avant est monté avec un positionnement ajustable sur ledit ensemble batterie, de façon à corriger des erreurs de centrage des tubes (3) par rapport auxdits trous (2) du bâti (7), **caractérisé en ce que** ledit bâti (7) avant a des fentes (10), au sein desquelles des vis (11) et similaires sont logées pour la fixation du bâti (7) lui-même auxdits montants (9) de l'ensemble batterie (6).

2. Ensemble batterie destiné à un échangeur de chaleur, comprenant un faisceau de tubes pourvu de tubes (3) et un ensemble d'épaulement pourvu d'un bâti (7) avant comportant des trous (2) destinés au passage desdits tubes (3), dans lequel ledit bâti (7) avant est fixé sur le châssis (8) de l'ensemble batterie au moyen de montants (9) respectifs, dans lequel ledit bâti (7) avant est monté avec un positionnement ajustable sur ledit ensemble batterie, de façon à corriger des erreurs de centrage des tubes (3) par rapport auxdits trous (2) du bâti (7), des guides (12) étant fixés au châssis (8) de l'ensemble batterie (6) de façon à créer un support longitudinal (13) logeant le bâti (7) avec un coulissement à friction sur l'ensemble batterie lui-même, **caractérisé par** un dispositif de ressort (14) étant fixé en outre auxdits guides (12) et dont la longueur est commandée au moyen d'une vis (15) correspondante.

3. Ensemble batterie selon la revendication 2, **caractérisé en ce que** lesdits guides (12) ont une partie (12b), surélevée par rapport à une partie (12a) adhérant aux montants (9) de l'ensemble batterie, de façon à former ledit support longitudinal (13) pour un logement coulissant dudit bâti (7).

4. Ensemble batterie selon la revendication 2, **caractérisé en ce que** ledit dispositif de ressort (14) et de vis (15) comprend en outre une douille (15a) solidaire dudit bâti (7) et une douille (15b) solidaire de ladite partie surélevée (12b) des guides (12), une découpe (16) étant fournie sur la partie (12b) elle-même pour le logement coulissant de ladite douille (15a), ladite vis (15) venant en prise avec lesdites douilles (15a, 15b) pour réaliser le coulissement commandé du bâti (7) sur lesdits guides (12).

5. Ensemble batterie selon l'une ou plusieurs des revendications précédentes, **caractérisé en ce que** lesdits trous (2) ont un diamètre au moins 0,1 mm plus grand que le diamètre des tubes (3).

6. Échangeur de chaleur, **caractérisé en ce qu'il** comprend au moins un ensemble batterie selon l'une ou plusieurs des revendications précédentes.
